# EUROPÄISCHE PATENTSCHRIFT

(11) **EP 1 344 785 B1**
(45) Veröffentlichungstag und Bekanntmachung des Hinweises auf die Patenterteilung: **23.08.2006**
(21) Anmeldenummer: 03004368.1
(22) Anmeldetag: 03.03.2003
(51) Int. Cl.: C08F 10/10

(54) **Verfahren zur Herstellung hochreaktiver Polyisobutene**
Process to prepare high reactive polyisobutene
Procédé de préparation de polyisobutylene hautement reactif

(30) Priorität: 15.03.2002 DE 10211418
(43) Veröffentlichungstag der Anmeldung: 17.09.2003
(73) Patentinhaber: LANXESS Deutschland GmbH, 51369 Leverkusen (DE)
(72) Erfinder: Bohnenpoll, Martin, Dr., 51375 Leverkusen (DE); Ismeier, Jürgen, Dr., 85661 Forstinning (DE); Nuyken, Osakr, Prof. Dr., 81927 München (DE); Vierle, Mario, 81547 München (DE); Schön, Dirk Kurt, 82237 Wörthsee (DE); Kühn, Fritz, Dr., 85405 Nandlstadt (DE)

(56) Entgegenhaltungen:
- WO-A-99/31151
- US-A- 4 668 838
- AYUSMAN SEN AND TA-WANG LAI: "catalytic polymerization of acetylenes and olefins by tetrakis(acetonitrile)palladium(II) bis(tetrafluoroborate)" ORGANOMETALLICS, Bd. 1, Nr. 2, 1982, Seiten 415-417, XP002239327

## Beschreibung

Die vorliegende Erfindung betrifft ein Verfahren zur Herstellung hochreaktiver Polyisobutene mit einem Gehalt an endständigen Vinylidengruppierungen von über 80 Mol-% und einem mittleren Molekulargewicht von 500 bis 10000 Dalton durch die kationische Polymerisation von Isobuten in der flüssigen Phase in Gegenwart von monomeren, solvensstabilisierten Übergangsmetallkomplexen mit schwach koordinierenden Anionen.

Hochmolekulare Polyisobutene mit Molekulargewichten bis zu mehreren 100000 Dalton sind seit langem bekannt und ihre Herstellung wird beispielsweise in H. Güterbock: Polyisobutylen und Mischpolymerisate, S. 77 bis 104, Springer, Berlin 1959, beschrieben.

Die zur Zeit erhältlichen Polyisobutene mit Molekulargewichten von 500 bis 5000 Dalton werden mit Hilfe von Lewis-Säure-Katalysatoren, wie Aluminiumchlorid, Aluminiumalkylchloriden oder Bortrifluorid hergestellt, und haben meist weniger als 10 Mol.-% endständige Doppelbindungen (Vinylidengruppierungen) und eine Molekulargewichtsverteilung (Dispersität) zwischen 2 und 5.

Von diesen herkömmlichen Polyisobutenen sind die sogenannten hochreaktiven Polyisobutene zu unterscheiden, welche einen hohen Gehalt an endständigen Vinylidengruppierungen von über 60 Mol.-% haben. Solche hochreaktiven Polyisobutene haben inzwischen einen merklichen Marktanteil erlangt und werden z.B. als Zwischenprodukt zur Herstellung von Additiven für Schmier- und Kraftstoffe verwendet, wie beispielsweise in DE-A 27 02 604 beschrieben. Zur Herstellung dieser Additive werden zunächst durch Reaktion überwiegend endständiger Doppelbindungen des Polyisobutens mit Maleinsäureanhydrid, Polyisobuten-Maleinsäureanhydrid-Addukte; insbesondere Polyisobutenylbernsteinsäureanhydride, erzeugt, welche anschließend mit bestimmten Aminen zum fertigen Additiv umgesetzt werden. Da bei der Adduktbildung mit Maleinsäureanhydrid hauptsächlich die endständigen Vinylidengruppierungen reagieren, wohingegen die weiter im Innern der Makromoleküle liegenden Doppelbindungen je nach ihrer Lage im Makromolekül ohne die Zugabe von Halogenen zu keinem oder zu einem deutlich geringeren Umsatz führen, ist der Anteil an endständigen Vinylidengruppierungen im Molekül das wichtigste Qualitätskriterium für diesen Polyisobutentypus.

Weitere Qualitätskriterien für Polyisobutene mit dem genannten Verwendungszweck sind deren mittleres Molekulargewicht und die Molekulargewichtsverteilung, auch als Dispersität bezeichnet, der im Polyisobuten enthaltenen Makromoleküle. Im allgemeinen werden Polyisobutene mit mittleren Molekulargewichten (Mn) von 500 bis , 5000 Dalton als Zwischenprodukte zur Herstellung der erwähnten Schmier- und Kraftstoffadditive verwendet.

Bei der Polymerisation von Isobuten entstehen Polyisobutenprodukte, deren Polyisobutenkomponenten, also die Polyisobutenmakromoleküle, eine mehr oder weniger breite, statistische Molekulargewichtsverteilung haben, mit der Folge, dass diese Polyisobutene, je breiter ihre Molekulargewichtsverteilung ist, einen immer größeren Anteil an Polyisobuterimakromolekülen mit relativ niedrigen oder relativ hohen Molekulargewichten enthalten, welche für den erwähnten Verwendungszweck weniger geeignet sind.

Es besteht daher das Bestreben, hochreaktive Polyisobutene mit mittleren Molekulargewichten herzustellen, wobei deren Molekulargewichtsverteilung möglichst eng sein sollte, um den Anteil an unerwünschten, relativ nieder- oder hochmolekularen Polyisobutenen im erzeugten Produkt zurückzudrängen und so dessen Qualität zu verbessern.

Nach der Lehre von DE-A 27 02 604 können reaktive Polyisobutene mit bis zu 88 Gew.-% endständigen Doppelbindungen durch die Bortrifluorid-katalysierte Polymerisation von Isobuten bei Temperaturen von -50 bis +30°C und bei Verweilzeiten von unter 10 Minuten erhalten werden. Ein niedrigerer Wert als 1,8 wird für die Dispersität bei den so hergestellten Polyisobutenen nicht gefunden.

Polyisobutene mit ähnlich hohen Anteilen endständiger Doppelbindungen, jedoch mit einer engeren Molekulargewichtsverteilung sind zugänglich, wenn man mit partiell deaktivierten Katalysatoren arbeitet, wie z.B. mit Komplexen aus Bortrifluorid, Alkoholen und/oder Ethern. Verfahren dieser Art sind beschrieben z.B. in-EP-A 145 235, US 5,408,418 und WO 99/64482.

In diesen Patentveröffentlichungen werden zwar auch Reaktionstemperaturen oberhalb 0°C genannt, die angeführten Beispiele führen jedoch nur dann zu einem hohen Gehalt an endständigen Doppelbindungen von über 80 %, wenn bei Temperaturen deutlich unterhalb von 0°C gearbeitet wird.

Polyisobutene mit einem Gehalt von bis zu 95 Molprozent endständigen Doppelbindungen sollen nach dem Gasphasenverfahren der US-A 3 166 546 sowie nach dem Verfahren von US-A 3 024 226 hergestellt werden können, in dem eine Bortrifluorid-Schwefeldioxid Gasmischung als Katalysator verwendet wird. Die Charakterisierung dieser Polyisobutene stützt sich auf die Ergebnisse der Infrarot-Spektroskopie. Eine Untersuchung der nach diesen Verfahren hergestellten Polyisobutene mit Hilfe der ¹³C-Kernresonanz-Spektroskopie (¹³C-NMR-Spektroskopie) ergab jedoch nur einen Gehalt von maximal 40 Mol-% endständigen Doppelbindungen.

US-A 4 227 027 lehrt Bortrifluorid-katalysierte Alkyltransferreaktionen, wobei als Katalysatoren Addukte aus Bortrifluorid und Diolen oder Polyolen bei Temperaturen von 40 bis 120°C eingesetzt werden. Bei der Anwendung dieses Verfahrens auf die Polymerisation von Isobuten unter Anwendung eines Bortrifluorid-1,2-Butandiol-Adduktes als Katalysator entstand als einziges Produkt Diisobutylen. Polyisobuten wurde nicht gebildet.

Eine weitere Möglichkeit zur Herstellung von hochreaktiven Polyisobutenen besteht in der lebenden kationischen Polymerisation von Isobuten mit anschließender Dehydrochlorierung, wie sie z.B. in US 5,340,881 beschrieben ist. Dieses Verfahren liefert bis zu 100 % endständige Doppelbindungen, erfordert jedoch ebenfalls tiefe Temperaturen, sowie ein komplexes Lösungsmittelgemisch, das das Recycling der nicht umgesetzten Ausgangsmaterialien unnötig erschwert.

Zusammenfassend lässt sich sagen, dass hochreaktive Polyisobutene mit einem mittleren Molekulargewicht von 500 bis 5000 Dalton und einem Gehalt an endständigen Vinylidengruppierungen von über 80 Mol-% nur dann erhalten werden, wenn bei Temperaturen unterhalb von 0°C gearbeitet wird. Diese Kühlung ist mit erheblichen Kosten verbunden, die die Wirtschaftlichkeit des Verfahrens reduzieren.

Aufgabe der Erfindung war es deshalb ein wirtschaftlicheres Verfahren zu entwickeln, das bei Temperaturen deutlich oberhalb von 0°C arbeitet und die beschriebenen hochreaktiven Polyisobutene liefert.

Es wurde nun gefunden, dass sich ein derartiges Verfahren verwirklichen lässt, wenn man als Katalysatoren monomere, solvensstabilisierte Übergangsmetallkomplexe mit schwach koordinierenden Anionen einsetzt.

Gegenstand der vorliegenden Erfindung ist daher ein Verfahren zur Herstellung von hochreaktiven Isobuten-Homo- und Copolymerisaten mit einem Gehalt an endständigen Vinylidengruppierungen von über 80 Mol-% und einem mittleren Molekulargewicht von 500 bis 10000 Dalton, das dadurch gekennzeichnet ist, dass man Isobuten oder Isobuten mit copolymerisierbaren Monomeren in Gegenwart eines Übergangmetallkatalysators der allgemeinen Formel

[M(R¹-CN)₄₋₆] (A)₂,

worin
- M: für ein Metall der 3. bis 12. Periode des Periodensystems der Elemente steht,
- R¹: für eine C₁-C₈-Alkylgruppe steht und
- A: ein schwach koordinierendes Anion bedeutet,
polymerisiert.

Als copolymerisierbare Monomere können in das erfindungsgemäße Verfahren beispielsweise Isopren und/oder Styrol eingesetzt werden. Bevorzugt werden Copolymerisate auf Basis von Isobuten und Isopren nach dem erfindungsgemäßen Verfahren hergestellt, die Molekulargewichte von etwa 2000 bis 7000 Dalton aufweisen und deren Anteil an eingebautem Isopren bis zu 60 % (bestimmt durch Kernresonanzspektroskopie) beträgt.

Die nach dem erfindungsgemäßen Verfahren hergestellten hochreaktiven Polyisobutene besitzen bevorzugt einen Gehalt an endständigen Vinylidengruppierungen von 95 bis 100 Mol-% und ein mittleres Molekulargewicht von 2000 bis 7000 Dalton.

Die erfindungsgemäßen Polyisobutene sind in vielen organischen Lösungsmitteln, wie Chloroform, Dichlormethan, Hexan, Heptan, Cyclohexan, Toluol oder Benzol oder deren Gemischen, löslich.

Das erfindungsgemäße Verfahren wird in vorteilhafter Weise in einem inerten organischen Lösungsmittel durchgeführt, wobei halogenierte und halogenfreie Kohlenwasserstoffe, die gegebenenfalls durch Nitrogruppen substituiert sein können, oder deren Gemische Verwendung finden. Bevorzugt sind beispielsweise Dichlormethan, Chloroform, Dichlorethan, Tetrachlorethan, Hexan oder Pentan, sowie Cycloalkane, wie Cyclohexan, sowie aromatische Kohlenwasserstoffe, wie Toluol und Benzol. Die günstigste Menge an Lösungsmittel kann leicht durch entsprechende Vorversuche ermittelt werden. Vorzugsweise liegt die Konzentration der eingesetzten Monomeren in dem verwendeten Lösungsmittel im Bereich von 0,01 bis 10 mol/l, besonders bevorzugt bei 0,1 bis 2 mol/l.

Bevorzugt werden als Übergangsmetallkatalysatoren der oben angegebenen allgemeinen Formel solche eingesetzt, in denen M für Mn, Ni, Cr oder Zn steht und A Anionen der Formeln BF₄⁻, SbX₆⁻, PX₆⁻ und/oder B(Ar)₄⁻, sowie über cyclische Gruppierungen verbrückte B(Ar)₄⁻ Anionen umfasst, wobei Ar für Phenyl steht, das 1 bis 5 Substituenten, wie F, Cl oder CF₃, tragen kann. Als cyclische Brücken für B(Ar)₄⁻ Anionen kommen bevorzugt Imidazolylbrücken in Frage.

In der obigen allgemeinen Formel steht R¹ bevorzugt für C₁-C₄-Alkylreste, wie Methyl, Ethyl, Propyl, Butyl, Isopropyl, Isobutyl oder tert.Butyl.

Besonders bevorzugt werden Übergangsmetallkatalysatoren der folgenden Formeln eingesetzt:

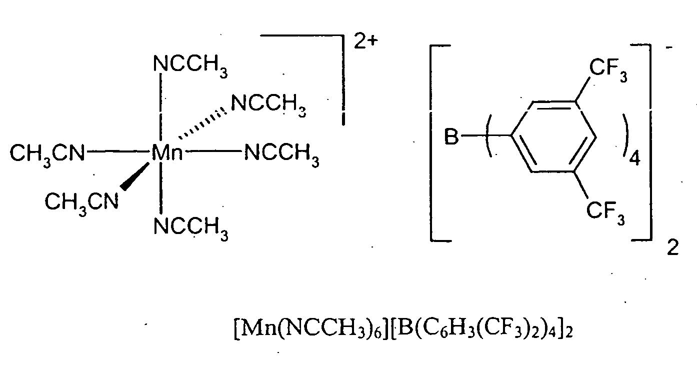

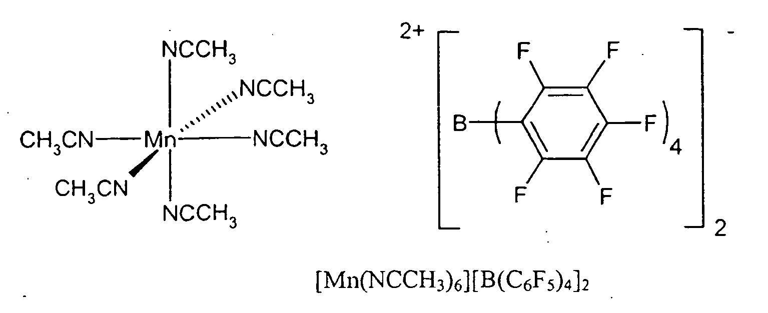

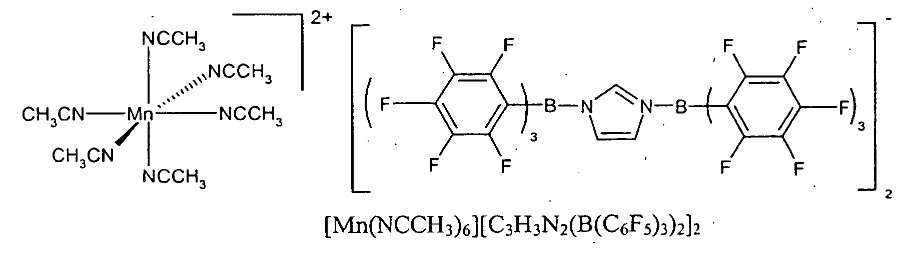

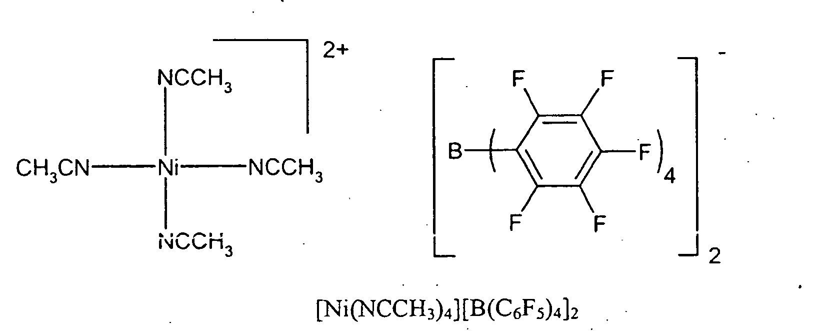

Die Übergangsmetallkatalysatoren werden in dem erfindungsgemäßen Verfahren im molaren Verhältnis von 1:15.000.000 bis 1:10, vorzugsweise 1:500.000 bis 1:10.000, bezogen auf die Mengen an eingesetzten Monomeren eingesetzt. Die Konzentration der eingesetzten Katalysatoren in der Reaktionsmischung liegt im Bereich von 0,01 bis 10 mmol/l, bevorzugt bei 0,1 bis 2 mmol/l.

Die Polymerisation wird erfindungsgemäß bei Temperaturen von etwa 0 bis 100°C, bevorzugt 20 bis 60°C, durchgeführt.

Die erfindungsgemäß eingesetzten Übergangsmetallkatalysatoren sind als solche bekannt und können nach bekannten Verfahren hergestellt werden wie beispielsweise in
- Wayne E Buschmann, Joel S. Miller, Chem. Eur. J. 1998, 4(9), 1731-1737,
- Bruce.H. Lipshutz, Wayne. Vaccaro, Bret Huft, Tetrahedron Letters 1986, 27(35), 4095-4098
- LaPointe, Robert E.; Roof, Gordon R.; Abboud, Khalil A.; Klosin, Jerzy. New Family of Weakly Coordinating Anions. Journal of the American Chemical Society (2000), 122(39), 9560-9561
beschrieben.

### Beispiele

Das Molekulargewicht Mn wurde mittels Gelpermeationschromatographie in Chloroform bestimmt. Säule: Waters Ultrastyragel®, Porengröße 10.000 und 100.000 Å sowie Waters Styragel®, Porengröße 500 Å, Detektion: Differentialrefraktometer (Waters R 401), Kalibrierung: Polystyrolstandards.

Bei Raumtemperatur gasförmige Monomere wurden vorteilhaft durch Verwendung von mit Phosphorpentoxid und feinverteiltem Kalium auf Aluminiumoxid gefüllten Säulen getrocknet, flüssige Monomere wurden durch Säulen mit Aluminiumoxid sowie Destillieren über Natrium/Aluminiumoxid getrocknet.

Halogenierte Lösemittel wie z.B. Dichlormethan wurden mit Calciumhydrid getrocknet und unter Inertgas destilliert.

Aliphatische Lösemittel wie z.B. Hexan wurden mit Natrium getrocknet und destilliert.

Die Stabilisierung der Polymeren erfolgte durch Zusatz von 2,2'-Methylen-bis(4-methyl-6-tert-butylphenol) (Vulkanox®BKF der Firma Bayer AG,Leverkusen).

### Beispiel 1

In einem 38 ml Druckreaktionsgefäß wurden unter Argon als Schutzgas 12,80 mg Initiator [Mn(NCCH₃)₆][B(C₆H₃(CF₃)₂)₄]₂ (5,0-10⁻⁶ mol) eingewogen und in einem Kühlbad bei -40°C 20 ml trockenes Dichlormethan zugeben. Zu der Initiatorlösung wurden 3 ml (1,988 g = 0,0355 mol) frisch einkondensiertes Isobuten zugegeben. Das Isobuten wurde zuvor über Molsieb und Kalium auf Aktivkohle getrocknet. Die Druckreaktionsgefäße wurden verschlossen und bei 30°C 9 Stunden polymerisiert.

Die Lösung blieb während der gesamten Polymerisation farblos. Nach 9 Stunden wurde die Polymerisation durch Zugabe von Methanol abgebrochen und das Polymer gefällt. Es wurde in farbloses, hochviskoses Polymer erhalten, das bis zur Gewichtskonstanz im Vakuum (50°C/0,1 mbar) getrocknet wurde. Es wurden 0,25 Gramm Polymer (16,9 % Ausbeute) mit einem Molekulargewicht (Mn) von 9,0*10³ Dalton (PDI = 1,6) erhalten. Das Polymerisat kann an Luft aufbewahrt werden und bleibt vollständig löslich.

### Beispiel 2

In einem 38 ml Druckreaktionsgefäß wurden unter Argon als Schutzgas 12,43 mg Initiator [Mn(NCCH₃)₆][C₃H₃N₂(B(C₆F₅)₃)₂]₂ (5,0·10⁻⁶ mol) eingewogen und in einem Kühlbad bei -40°C 20 ml trockenes Dichlormethan zugeben. Zu der Initiatorlösung wurden 3 ml (1,988 g = 0,0355 mol) frisch einkondensiertes Isobuten zugegeben. Das Isobuten wurde zuvor über Molsieb und Kalium auf Aktivkohle getrocknet. Die Druckreaktionsgefäße wurden verschlossen und bei 30°C 16 Stunden polymerisiert, auch diese Lösung blieb während der gesamten Polymerisation farblos. Nach gegebener Zeit wurde die Polymerisation durch Zugabe von Methanol abgebrochen und das Polymer gefällt. Es wurde ein farbloses, hochviskoses Polymer erhalten, das bis zur Gewichtskonstanz im Vakuum (50°C/0,1 mbar) getrocknet wurde. Es wurden 0,59 Gramm Polymer (39 % Ausbeute) sowie bei mit einem Molekulargewicht (Mn) von 6,4^{∗} 10³ Dalton (PDI = 1,7) erhalten. Das Polymerisat kann an Luft aufbewahrt werden und bleibt vollständig löslich.
Der Gehalt an endständigen Vinyliden-Endgruppen beträgt laut ¹H-NMR 100 Mol%.

### Beispiel 3

In einem 38 ml Druckreaktionsgefäß wurden unter Argon als Schutzgas 24,86 mg Initiator [Mn(NCCH₃)₆][C₃H₃N₂(B(C₆F₅)₃)₂]₂ (1,0·10⁻⁵ mol) eingewogen und in einem Kühlbad bei -40°C 20 ml trockenes Dichlormethan zugeben. Zu der Initiatorlösung wurden 3 ml (1,988 g = 0,0355 mol) frisch einkondensiertes Isobuten zugegeben. Das Isobuten wurde zuvor über Molsieb und Kalium auf Aktivkohle getrocknet. Die Druckreaktionsgefäße wurden verschlossen und bei 30°C 16 Stunden polymerisiert, auch diese Lösung blieb während der gesamten Polymerisation farblos. Nach gegebener Zeit wurde die Polymerisation durch Zugabe von Methanol abgebrochen und das Polymer gefällt. Es wurde ein farbloses, hochviskoses Polymer erhalten, das bis zur Gewichtskonstanz im Vakuum (50°C/0,1 mbar) getrocknet wurde. Es wurden 0,69 Gramm Polymer (45% Ausbeute) sowie bei mit einem Molekulargewicht (Mn) von 5,5^{∗}10³ Dalton (PDI = 1,8) erhalten. Das Polymerisat kann an Luft aufbewahrt werden und bleibt vollständig löslich.
Der Gehalt an endständigen Vinyliden-Endgruppen beträgt laut ¹H-NMR 100 Mol%.

### Beispiel 4

Die isotherme Polymerisation von Isobuten bei 40°C wird in einem Polymerisations-Autoklaven durchgeführt. Der Polymerisationsautoklav wird vor der Reaktion ausgeheizt und mit Argon geflutet. Anschließend werden 93 mL Dichlormethan vorgelegt und auf 40°C temperiert. Sobald die Temperatur den Sollwert erreicht hat, wird Isobuten (p(IB) = 2 bar) unter isothermen Bedingungen zugegeben, bis die Lösung vollständig gesättigt ist. Die Sättigung erfolgt bei einer Rührgeschwindigkeit von 400 Umdrehungen pro Minute, die Polymerisation wird bei einer Rührergeschwindigkeit von 1 000 Umdrehungen pro Minute durchgeführt. Die Reaktion beginnt mit Zugabe von 5 mL einer 2 mmolaren Lösung von [Mn(NCCH₃)₆][B(C₆H₂(CF₃)₃)₄]₂ (n(I) = 10 µmol) in Dichlormethan. Die Initiatorlösung wird mit Überdruck in die Monomerlösung hineingespritzt und das Einspritzsystem mit 2 mL Dichlormethan nachgespült (V(CH₂Cl₂)_{ges} = 100 mL). Mit Hilfe der externen und der internen (manuelle Regelung) Kühlung wird die Temperatur während der Reaktion konstant gehalten. Verbrauchtes Monomer wird kontinuierlich nachgeliefert. Nach einer Reaktionszeit von 16 h erfolgte keine Polymerisation mehr. Der Überdruck im Autoklaven wird unter langsamen Rühren abgebaut und anschließend das Polymer in einem Überschuss von Methanol gefällt.

Nach Abdampfen des Lösemittels wird das Polymer im Feinvakuum bis zur Gewichtskonstanz getrocknet. Es konnten 67,0 g Polymer mit einer mittels Gelpermeationschromatographie bestimmten Molmasse (Mn) von 2100 Dalton (PDI = 1,2) erhalten werden.
Der Gehalt an endständigen Vinyliden-Endgruppen beträgt laut ¹H-NMR 100 Mol%.

### Beispiel 5

In 12 38 ml Druckreaktionsgefäßen wurden unter Argon als Schutzgas jeweils 12,43 mg Inititator [Mn(NCCH₃)₆][C₃H₃N₂(B(C₆F₅)₃)₂]₂ (5,0·10⁻⁶ mol) eingewogen und in einem Kühlbad bei -40°C jeweils 20 ml trockenes Dichlormethan zugeben. Der Gehalt an eingewogenen Isopren und Isobuten wurde variiert. Die Druckreaktionsgefäße wurden verschlossen und in einem Wasserbad bei 30°C 16 Stunden polymerisiert. Nach Ausfällen des Polymers mit Methanol und Stabilisierung mit BKF (0,02 g pro Probe) wurden die Polymere bis zur Gewichtskonstanz im Feinvakuum (0,1 mbar/25°C) bis zur Gewichtskonstanz getrocknet. Die Umsatzbestimmung erfolgte gravimetrisch, die Molmassen wurden mittels Gelpermeationschromatographie bestimmt. Die Bestimmung der Menge eingebauten Isoprens erfolgte mittels Kernresonanzspektroskopie. Die Ergebnisse sind in Tabelle 1 aufgelistet.

**Tabelle 1:Copolymerisation von Isobuten/Isopren mit Mn-Komplexen**

| IB:IP / Mol-% | Umsatz / % | Mₙ - 10⁻³ / Dalton | Mol-% IB/IP Polymer |
|---|---|---|---|
| 100:0 | 32,9 | 6,4 | 0,0 |
| 98:2 | 6,6 | 5,6 | 1,5 |
| 96:4 | 14,9 | 5,9 | 2,3 |
| 94:6 | 6,2 | 4,8 | 2,3 |
| 92:8 | 19,9 | 4,5 | 3,6 |
| 90:10 | 6,2 | 2,8 | 7,7 |
| 80:20 | 2,3 | 3,3 | 6,0 |
| 70:30 | 1,8 | 2,8 | nicht bestimmbar |
| 50:50 | 3,0 | 2,9 | nicht bestimmbar |
| 30:70 | 6,1 | 2,9 | nicht bestimmbar |
| 0:100 | 0,7 | 2,6 | nicht bestimmbar |

Alle Polymere waren vollständig in Toluol löslich und farblose, hochviskose Flüssigkeiten.

## Patentansprüche

1. Verfahren zur Herstellung von hochreaktiven Isobuten-Homo- und Copolymerisaten mit einem Gehalt an endständigen Vinylidengruppierungen von über 80 Mol-% und einem mittleren Molekulargewicht von 500 bis 10000 Dalton, **dadurch gekennzeichnet, dass** man Isobuten oder Isobuten mit copolymerisierbaren Monomeren in Gegenwart eines Übergangmetallkatalysators der allgemeinen Forrnel
[M(R¹-CN)₄₋₆] (A)₂,
worin
M für ein Metall der 3. bis 12. Periode des Periodensystems der Elemente steht,
R¹ für eine C₁-C₈-Alkylgruppe steht und
A ein schwach koordinierendes Anion bedeutet,
polymerisiert.

2. Verfahren nach Anspruch 1, **dadurch gekennzeichnet, dass** man die Polymerisation bei Temperaturen von 0 bis 100°C durchführt.

3. Verfahren nach Anspruch 1, **dadurch gekennzeichnet, dass** man die Polymerisation in Gegenwart eines inerten organischen Lösungsmittels durchführt.

4. Verfahren nach Anspruch 1, **dadurch gekennzeichnet, dass** man den Katalysator in einem molaren Verhältnis von 1:15.000.000 bis 1:10, bezogen auf das eingesetzte Monomer, einsetzt.

## Claims

1. Process for the production of highly reactive isobutene homopolymers and copolymers with a content of terminal vinylidene groupings of greater than 80 mol % and an average molecular weight of 500 to 10,000 dalton, **characterized in that** it comprises polymerizing isobutene or isobutene with copolymerizable monomers in the presence of a transition metal catalyst of the general formula
[M(R¹-CN)₄₋₆] (A)₂,
wherein
M is a metal from the 3rd to 12th periods of the periodic system of elements,
R¹ is a C₁-C₈ alkyl group and
A is a weakly coordinating anion.

2. Process according to Claim 1, **characterized in that** the polymerization is performed at a temperature from 0 to 100°C.

3. Process according to Claim 1, **characterized in that** the polymerization is performed in the presence of an inert organic solvent.

4. Process according to Claim 1, **characterized in that** the catalyst is introduced in a molar ratio of 1:15,000,000 to 1:10, relative to the monomer used.

## Revendications

1. Procédé de préparation d'homopolymères et copolymères d'isobutène hautement réactifs présentant une teneur en groupements vinylidène terminaux supérieure à 80 % molaires et un poids moléculaire moyen de 500 à 10 000 Daltons, **caractérisé en ce qu'**on polymérise de l'isobutène ou de l'isobutène avec des monomères copolymérisables en présence d'un catalyseur à base de métal de transition de la formule générale :
[M(R¹-CN)₄₋₆] (A)₂
dans laquelle
M représente un métal des périodes 3 à 12 du système périodique des éléments,
R¹ représente un groupe alkyle en C₁-C₈, et
A représente un anion faiblement coordonnant.

2. Procédé suivant la revendication 1, **caractérisé en ce qu'**on effectue la polymérisation à des températures de 0 à 100°C.

3. Procédé suivant la revendication 1, **caractérisé en ce qu'**on effectue la polymérisation en présence d'un solvant organique inerte.

4. Procédé suivant la revendication 1, **caractérisé en ce qu'**on met en oeuvre le catalyseur dans un rapport molaire de 1/15 000 000 à 1/10 par rapport au monomère introduit.
